(19) Europäisches Patentamt
European Patent Office
Office européen des brevets

(11) **EP 4 657 214 A1**

(12) **EUROPEAN PATENT APPLICATION**
published in accordance with Art. 153(4) EPC

(43) Date of publication:
**03.12.2025 Bulletin 2025/49**

(21) Application number: **23922308.4**

(22) Date of filing: **27.09.2023**

(51) International Patent Classification (IPC):
***G06F 3/041*** (2006.01)

(52) Cooperative Patent Classification (CPC):
**G06F 3/041**

(86) International application number:
**PCT/CN2023/121968**

(87) International publication number:
**WO 2024/169190 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.02.2023 CN 202310158279**

(71) Applicant: **Huawei Technologies Co., Ltd.**
**Shenzhen, Guangdong 518129 (CN)**

(72) Inventors:
• **HUANG, Fang**
  **Shenzhen, Guangdong 518129 (CN)**
• **FENG, Pengfei**
  **Shenzhen, Guangdong 518129 (CN)**
• **NIU, Zeyu**
  **Shenzhen, Guangdong 518129 (CN)**
• **LIU, Jun**
  **Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **DISPLAY METHOD AND APPARATUS**

(57) This application provides a display method and apparatus, to improve display effect of a touch track on a touchscreen. In the method, an electronic device may receive a first sliding operation whose direction and/or speed change/changes, and display a touch track corresponding to the first sliding operation, where roughness of the touch track is less than 0.75, the touch track is the same as a sliding track corresponding to the first sliding operation, a display parameter corresponding to a third position changes when a touch point corresponding to the first sliding operation reaches the third position, and the third position is any position between a first position and a second position. In this way, the touch track displayed by the electronic device is smooth, and has good accuracy (that is, consistency), and a delay of displaying the touch track is small.

```
┌─────────────────────────────────────────────────────┐
│         Receive a first sliding operation            │──── S301
└─────────────────────────────────────────────────────┘
                          │
                          ▼
┌─────────────────────────────────────────────────────┐
│   Display a touch track corresponding to the first   │
│   sliding operation, where roughness of the touch    │
│   track is less than 0.75, the touch track is the    │
│   same as a sliding track corresponding to the       │──── S302
│   first sliding operation, a display parameter       │
│   corresponding to a third position changes when a   │
│   touch point corresponding to the first sliding     │
│   operation reaches the third position, and the      │
│   third position is any position between a first      │
│   position and a second position                     │
└─────────────────────────────────────────────────────┘
```

FIG. 3A

**Description**

CROSS-REFERENCE TO RELATED APPLICATIONS

This application claims priority to Chinese Patent Application No. 202310158279.5, filed with the China National Intellectual Property Administration on February 14, 2023 and entitled "DISPLAY METHOD AND APPARATUS", which is incorporated herein by reference in its entirety.

TECHNICAL FIELD

Embodiments of this application relate to the field of terminal technologies, and in particular, to a display method and apparatus.

BACKGROUND

With development of intelligent terminal technologies, touchscreens are increasingly widely used in, for example, mobile phones, tablet computers, and home appliances. When a user slides on or taps the touchscreen via at least one of a finger, an active capacitive stylus, a passive capacitive stylus, or the like, corresponding touch points are formed on the touchscreen, and a control chip of the touchscreen needs to quickly and correctly locate and display a touch track of these touch points. In this way, the user can have good touch experience. The touch track of the touch points is obtained by connecting a series of discrete points corresponding to the touch points, and the discrete points corresponding to the touch points are usually determined based on measured coordinates collected by a touch sensor.

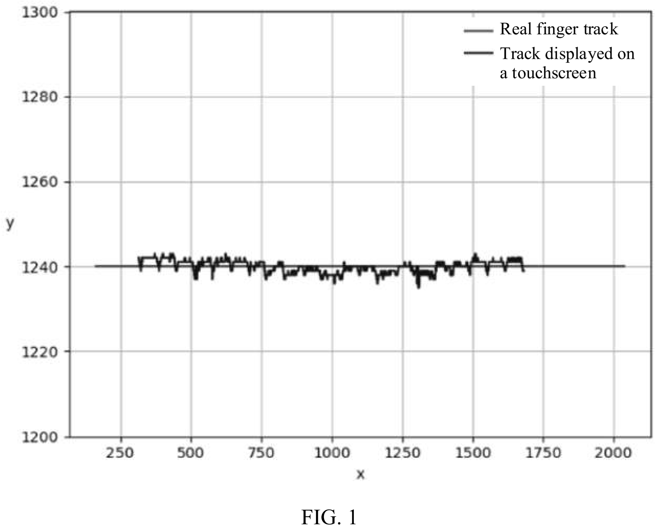

However, due to impact of factors such as external noise, system interior noise, and a finger shake, the touch track displayed on the touchscreen is rough, or the touch track displayed on the touchscreen is inconsistent with a sliding track of the user on the touchscreen, or a delay of displaying the touch track on the touchscreen is large. As shown in FIG. 1, a sliding track (namely, a real finger track) of the user on the touchscreen is a horizontal line. However, due to impact of noise interference, a touch track corresponding to the horizontal line is displayed as a sawtooth line on the touchscreen. That is, the track displayed on the touchscreen is rough and is inconsistent with the real finger track.

Therefore, how to improve display effect of the touch track on the touchscreen is an urgent technical problem to be resolved in this field.

SUMMARY

This application provides a display method and apparatus, to improve display effect of a touch track on a touchscreen.

According to a first aspect, an embodiment of this application provides a display method. The method may be applied to an electronic device. The method includes: receiving a first sliding operation, where the first sliding operation includes a first action and a second action; the first sliding operation is used to slide from a first position to a second position; and the first action slides at a first speed, and the second action slides at a second speed; or the first action slides in a first direction, and the second action slides in a second direction; and displaying a touch track corresponding to the first sliding operation, where roughness of the touch track is less than 0.75, the touch track is the same as a sliding track corresponding to the first sliding operation, a display parameter corresponding to a third position changes when a touch point corresponding to the first sliding operation reaches the third position, and the third position is any position between the first position and the second position.

In this embodiment of this application, the "roughness" may be understood as a roughness degree of the touch track (that is, a status of a sawtooth line included in an edge of the touch track). Therefore, the roughness may be used to describe smoothness and a noise amount of the touch track, and smaller roughness indicates less noise impact on the touch track and a smoother touch track, that is, fewer sawtooth lines in the touch track. In some other embodiments, the roughness of the touch track may also be referred to as smoothness of the track. In this case, smaller smoothness indicates a smoother touch track.

Correspondingly, "roughness of the touch track is less than 0.75" may be understood as that the edge of the touch track is neat, without many sawtooth lines. In other words, the edge of the touch track is smooth.

In this embodiment of this application, "a sliding track corresponding to the first sliding operation" may be understood as a real track drawn by a user on the touchscreen, and "a touch track corresponding to the first sliding operation" may be understood as a track displayed on the touchscreen after the electronic device receives the first sliding operation. Correspondingly, "the touch track corresponding to the first sliding operation is the same as the sliding track corresponding to the first sliding operation" may be understood as that the touch track is consistent with the sliding track, in other words, the touch track and the sliding track have a same shape and size, and a display position of the touch track on the touchscreen is the same as an operation position of the first sliding operation on the touchscreen. "A display position of the touch track on the touchscreen is the same as an operation position of the first sliding operation on the touchscreen" may be understood as that a display position of each touch point in the touch track on the touchscreen is infinitely close to an operation position corresponding to the touch point.

In this embodiment of this application, "a display parameter corresponding to a third position changes when a touch point corresponding to the first sliding operation reaches the third position, and the third position is any position between the first position and the second position" may be understood as that when the user slides to the third position on the touchscreen, the display parameter of the position changes, to display the corresponding touch track. In this way, when the touch point reaches the third position, the electronic device displays the corresponding touch track in time. In other words, an interval between a time point at which the electronic device receives the first sliding operation and a time point of displaying the corresponding touch track is small. This effectively improves user experience.

In the foregoing method, when receiving the first sliding operation whose direction and/or speed change/- changes, the electronic device may display the touch track corresponding to the first sliding operation, where the roughness of the touch track is less than 0.75, the touch track is the same as the sliding track corresponding to the first sliding operation, the display parameter corresponding to the third position changes when the touch point corresponding to the first sliding operation reaches the third position, and the third position is any position between the first position and the second position. In this way, the touch track displayed by the electronic device is smooth, and has good accuracy, and a delay of displaying the touch track is small. This can effectively improve display effect of the touch track on the touchscreen, and can further effectively improve user experience.

In a possible design, a larger difference between the first speed and the second speed indicates smaller roughness of the touch track. In this design, display performance of the touch track on the touchscreen may be dynamically adjusted based on the difference between the first speed and the second speed, to improve the display effect of the touch track on the touchscreen.

In a possible design, a larger difference between the first direction and the second direction indicates smaller roughness of the touch track. In this design, display performance of the touch track on the touchscreen may be dynamically adjusted based on the difference between the first direction and the second direction, to improve the display effect of the touch track on the touchscreen.

In a possible design, the display parameter includes at least one of an icon, a color, or brightness. In this design, the electronic device can adjust a plurality of types of display parameters. In this way, the touch track can be displayed in a plurality of manners, so that the user can intuitively observe the touch track. The icon may include, for example, text or a graph.

In a possible design, the first sliding operation includes at least one of straight-line sliding, broken-line sliding, or curved sliding. In this design, a plurality of implementations of the first sliding operation are provided, so that the user can use the touchscreen in a plurality of manners. This effectively improves user experience.

In a possible design, the touch track is determined based on measured coordinates of the first position and filtered coordinates of the second position. The filtered coordinates of the second position are obtained by filtering measured coordinates of the second position based on a first state equation, and the first state equation is determined based on a sliding direction and/or a sliding speed of the first sliding operation. The sliding direction includes the first direction and the second direction, and the sliding speed includes the first speed and the second speed. In this design, because the sliding direction and/or the sliding speed of the first sliding operation are/is variable, the electronic device may determine a corresponding filtering equation (the first state equation) based on the sliding direction and/or the sliding speed, and filter, based on the filtering equation, the touch track corresponding to the first sliding operation, to eliminate impact of noise on the touch track. Therefore, the roughness of the touch track displayed by the electronic device is less than 0.75, and the touch track is the same as the sliding track corresponding to the first sliding operation.

In this embodiment of this application, an independent variable of the first state equation is the measured coordinates, and a dependent variable of the first state equation is filtered measured coordinates. Therefore, the filtered measured coordinates are obtained by filtering the measured coordinates of the second position based on the first state equation. The "filtered measured coordinates" may be understood as real values corresponding to the second position when the touch point on the touchscreen reaches the second position in an operation process of the first sliding operation.

In a possible design, that the sliding direction and/or the sliding speed are/is used to determine the first state equation includes: determining a first parameter based on the sliding speed; determining a second parameter based on the sliding direction; and determining the first state equation based on the first parameter and the second parameter. In this design, the second parameter used to construct the first state equation may be determined based on the sliding direction, and the first parameter used to construct the first state equation may be determined based on the sliding speed. In this way, the first state equation can dynamically and adaptively change with the sliding direction and/or the sliding speed of the first sliding operation, to eliminate a roughness phenomenon of the touch track caused by the change with the sliding direction and/or the sliding speed of the first sliding operation, and further achieve better filtering effect. Therefore, the touch track displayed by the electronic device is closer to the real sliding track of the first sliding operation. This effectively improves the display effect of the touch track on the touchscreen.

In some possible embodiments, the first state equation corresponds to a Kalman filtering model, and correspondingly, the first parameter and the second parameter are parameters of the Kalman filtering model.

Further, in a possible design, the first parameter includes a prediction noise covariance matrix Q and/or a measurement noise covariance matrix R, and the second parameter includes a state transition matrix A. The prediction noise covariance matrix Q and/or the measurement noise covariance matrix R are/is used to represent confidence of a prediction model, and the prediction model is used to predict a touch track of the touch point. The state transition matrix A is used to represent at least one of a movement distance, a movement speed, or a movement acceleration of the touch point.

Further, in a possible design, determining the first parameter based on the sliding speed includes: determining the movement distance of the touch point based on the sliding speed; and determining a value of a first element in the prediction noise covariance matrix Q and/or a value of a first element in the measurement noise covariance matrix R based on the movement distance. In this design, the movement distance of the touch point is determined based on the sliding speed, and the value of the first element in the prediction noise covariance matrix Q and/or the value of the first element in the measurement noise covariance matrix R may be determined based on the movement distance. Therefore, the first state equation determined based on the prediction noise covariance matrix Q and/or the measurement noise covariance matrix R have/has better filtering effect.

In a possible design, in the prediction noise covariance matrix Q and/or the measurement noise covariance matrix R, the first element includes an element at a diagonal position.

In a possible design, the value of the first element is determined based on the movement distance and according to a first formula; or the value of the first element is determined based on the movement distance and a first mapping table, where the first mapping table includes a mapping relationship between the movement distance and the first element.

In a possible design, the first formula is as follows:

$$q = a * (b * dist(K)^2 - c * dist(k) + d)^m.$$

Herein, a, b, c, d, and m are non-zero constants, q is the first element, and *dist*(k) is the movement distance.

In a possible design, determining the second parameter based on the sliding direction includes: determining a movement direction difference of the touch point based on the sliding direction; and determining a value of a second element in the state transition matrix A based on the movement direction difference. In this design, the value of the second element in the state transition matrix A is determined based on the movement direction difference, so that the determined state transition matrix A better conforms to a current state of the touch point, and the first state equation determined based on the state transition matrix A has better filtering effect.

In a possible design, the value of the second element is determined based on the movement direction difference and according to a second formula; or the value of the second element is determined based on the movement direction difference and a second mapping table, where the second mapping table includes a mapping relationship between the movement direction difference and the second element. In this design, a plurality of implementations of determining the value of the second element in the state transition matrix A based on the movement direction difference are provided, so that the value of the second element in the state transition matrix A can be flexibly determined.

In a possible design, the second formula is as follows:

$$\beta = \frac{1}{1 + e^{-(f * \Delta dir - g)}}.$$

Herein, f and g are non-zero constants, $\beta$ is the second element, and $\Delta$dir is the movement direction difference.

In a possible design, determining the first state equation based on the first parameter and the second parameter includes: constructing a prediction model based on N-order Taylor series and the state transition matrix A; determining a prediction error covariance matrix *PK* of the touch point at a first moment based on the prediction noise covariance matrix Q and the state transition matrix A; determining a first Kalman gain coefficient K1 based on a measurement matrix C, the prediction error covariance matrix *PK*, and the measurement noise covariance R that correspond to first coordinates; and updating the prediction model based on the first Kalman gain coefficient K1, to obtain the first state equation. The N-order Taylor series may be, for example, any one of first-order Taylor series, second-order Taylor series, or third-order Taylor series. This is not specifically limited in embodiments of this application. In this design, the prediction model may be constructed based on the N-order Taylor series and the state transition matrix A, the first Kalman gain coefficient of a Kalman filter is determined based on the prediction noise covariance matrix Q and the state transition matrix A, and the prediction model is updated based on the first Kalman gain coefficient, to obtain the Kalman filtering model (that is, the first state equation).

In a possible design, the method further includes: determining, based on the prediction error covariance matrix *PK,* the first Kalman gain coefficient K1, and the measurement matrix C, an error covariance matrix *P'K* corresponding to filtered first coordinates, where the error covariance matrix $P'K$ is used to determine a second Kalman gain coefficient; updating the first state equation based on the second Kalman gain coefficient, to obtain an updated first state equation; receiving a second sliding operation, where the second sliding operation is a sliding operation after the first sliding operation, and the second sliding operation and the first sliding operation are consecutive; filtering, based on the updated first state equation, measured coordinates corresponding to the second sliding operation; and displaying, based on filtered measured coordinates, a touch track corresponding to the second sliding operation.

According to a second aspect, an embodiment of this application further provides a display apparatus. The apparatus includes:

a receiving module, configured to receive a first sliding operation, where the first sliding operation includes a first action and a second action; the first sliding operation is used to slide from a first position to a second position; and the first action slides at a first speed, and the second action slides at a second speed; or the first action slides in a first direction, and the second action slides in a second direction; and

a display module, configured to display a touch track corresponding to the first sliding operation, where roughness of the touch track is less than 0.75, the touch track is the same as a sliding track corresponding to the first sliding operation, a display parameter corresponding to a third position changes when a touch point corresponding to the first sliding operation reaches the third position, and the third position is any position between the first position and the second position.

In a possible design, a larger difference between the first speed and the second speed indicates smaller roughness of the touch track.

In a possible design, a larger difference between the first direction and the second direction indicates smaller roughness of the touch track.

In a possible design, the display parameter includes at least one of an icon, a color, or brightness.

In a possible design, the first sliding operation includes at least one of straight-line sliding, broken-line sliding, or curved sliding.

In a possible design, the touch track is determined by a processing module based on measured coordinates of the first position and filtered coordinates of the second position. The filtered coordinates of the second position are obtained by filtering measured coordinates of the second position based on a first state equation, and the first state equation is determined by the processing module based on a sliding direction and/or a sliding speed of the first sliding operation. The sliding direction includes the first direction and the second direction, and the sliding speed includes the first speed and the second speed. In a possible design, the processing module is specifically configured to: determine a first parameter based on the sliding speed; determine a second parameter based on the sliding direction; and determine the first state equation based on the first parameter and the second parameter.

In some possible embodiments, the first state equation corresponds to a Kalman filtering model, and correspondingly, the first parameter and the second parameter are parameters of the Kalman filtering model.

Further, in a possible design, the first parameter includes a prediction noise covariance matrix Q and/or a measurement noise covariance matrix R, and the second parameter includes a state transition matrix A. The prediction noise covariance matrix Q and/or the measurement noise covariance matrix R are/is used to represent confidence of a prediction model, and the prediction model is used to predict a touch track of the touch point. The state transition matrix A is used to represent at least one of a movement distance, a movement speed, or a movement acceleration of the touch point.

Further, in a possible design, the processing module is specifically configured to: determine the movement distance of the touch point based on the sliding speed; and determine a value of a first element in the prediction noise covariance matrix Q and/or a value of a first element in the measurement noise covariance matrix R based on the movement distance.

In a possible design, in the prediction noise covariance matrix Q and/or the measurement noise covariance matrix R, the first element includes an element at a diagonal position.

In a possible design, the value of the first element is determined based on the movement distance and according to a first formula; or the value of the first element is determined based on the movement distance and a first mapping table, where the first mapping table includes a mapping relationship between the movement distance and the first element.

In a possible design, the first formula is as follows:

$$q = a * (b * dist(K)^2 - c * dist(k) + d)^m.$$

Herein, a, b, c, d, and m are non-zero constants, q is the first element, and dist(k) is the movement distance.

In a possible design, the processing module is specifically configured to: determine a movement direction difference of the touch point based on the sliding direction; and determine a value of a second element in the state transition matrix A based on the movement direction difference.

In a possible design, the value of the second element is determined based on the movement direction difference and according to a second formula; or the value of the second element is determined based on the movement direction difference and a second mapping table, where the second mapping table includes a mapping relationship between the movement direction difference and the second element.

In a possible design, the second formula is as follows:

$$\beta = \frac{1}{1+e^{-(f*\Delta dir - g)}}.$$

Herein, f and g are non-zero constants, $\beta$ is the second element, and $\Delta$dir is the movement direction difference.

In a possible design, the processing module is specifically configured to: construct a prediction model based on N-order Taylor series and the state transition matrix A; determine a prediction error covariance matrix *PK* of the touch point at a first moment based on the prediction noise covariance matrix Q and the state transition matrix A; determine a first Kalman gain coefficient K1 based on a measurement matrix C, the prediction error covariance matrix *PK*, and the measurement noise covariance R that correspond to first coordinates; and update the prediction model based on the first Kalman gain coefficient K1, to obtain the first state equation. The N-order Taylor series may be, for example, any one of first-order Taylor series, second-order Taylor series, or third-order Taylor series. This is not specifically limited in embodiments of this application. In this design, the prediction model may be constructed based on the N-order Taylor series and the state transition matrix A, the first Kalman gain coefficient of a Kalman filter is determined based on the prediction noise covariance matrix Q and the state transition matrix A, and the prediction model is updated based on the first Kalman gain coefficient, to obtain the Kalman filtering model (that is, the first state equation).

In a possible design, the processing module is further configured to: determine, based on the prediction error covariance matrix *PK,* the first Kalman gain coefficient K1, and the measurement matrix C, an error covariance matrix *P'K* corresponding to filtered first coordinates, where the error covariance matrix *P'K* is used to determine a second Kalman gain coefficient; and update the first state equation based on the second Kalman gain coefficient, to obtain an updated first state equation. The receiving module is further configured to: receive a second sliding operation, where the second sliding operation is a sliding operation after the first sliding operation, and the second sliding operation and the first sliding operation are consecutive; filter, based on the updated first state equation, measured coordinates corresponding to the second sliding operation; and display, based on filtered measured coordinates, a touch track corresponding to the second sliding operation.

According to a third aspect, an embodiment of this application provides a computer-readable storage medium. The computer-readable storage medium stores a computer program. When the computer program is run, the display method in any one of the first aspect or the possible designs of the first aspect is implemented.

According to a fourth aspect, an embodiment of this application provides a chip system. The chip system includes at least one processor. When program instructions are executed in the at least one processor, the method in any one of the first aspect and the optional designs of the first aspect is implemented.

In a possible design, the chip system further includes a communication interface, and the communication interface is configured to input or output information.

In a possible design, the chip system further includes a memory. The memory is coupled to the processor through the communication interface, and is configured to store the foregoing instructions, so that the processor reads, through the communication interface, the instructions stored in the memory.

In a possible design, the processor may be a processing circuit. This is not limited in this application.

According to a fifth aspect, an embodiment of this application provides an electronic device. The electronic device includes at least one processor. When program instructions are executed in the at least one processor, the method in any one of the first aspect and the optional designs of the first aspect is implemented.

According to a sixth aspect, an embodiment of this application further provides a computer program product including instructions. When the computer program product runs on the foregoing apparatus, the display method in any one of the first aspect or the possible designs of the first aspect is performed.

For beneficial effect of the second aspect to the sixth aspect, specifically refer to technical effect that can be achieved in corresponding designs in the first aspect. Details are not described herein again.

BRIEF DESCRIPTION OF DRAWINGS

FIG. 1 is a diagram of comparison between a real touch track of a touch point and a displayed touch track on a touchscreen;

FIG. 2 is a schematic flowchart of implementing a Kalman filtering model;

FIG. 3A is a schematic flowchart of a display method according to an embodiment of this application;

FIG. 3B is a diagram 1 of comparison between a sliding track and a touch track according to an embodiment of this application;

FIG. 3C is a diagram 2 of comparison between a sliding track and a touch track according to an embodiment of this application;

FIG. 3D is a diagram of a touch track according to an embodiment of this application;

FIG. 4 is a schematic flowchart of a filtering method according to an embodiment of this application;

FIG. 5 is a diagram in which a value of a first element in a prediction noise covariance matrix Q changes with a movement distance of a touch point according to an embodiment of this application;

FIG. 6 is a diagram in which a value of a second element in a state transition matrix A changes with a movement direction difference of a touch point according to an embodiment of this application;

FIG. 7 is a diagram of a straight-line touch track of a touch point before and after filtering according to an embodiment of this application;

FIG. 8 is a diagram of a curved touch track of a touch point before and after filtering according to an embodiment of this application;

FIG. 9 is a diagram of a structure of a display apparatus according to an embodiment of this application; and

FIG. 10 is a diagram of a structure of an electronic device according to an embodiment of this application.

## DESCRIPTION OF EMBODIMENTS

The following describes in detail embodiments of this application with reference to accompanying drawings.

For ease of understanding, technical terms that may be used in embodiments of this application are first explained.

1. Measured coordinates of a touch point may be understood as a measurement position that is of the touch point and that is collected by a touch sensor corresponding to a touchscreen when a user slides or taps on the touchscreen via a finger, an active capacitive stylus, or a passive capacitive stylus.

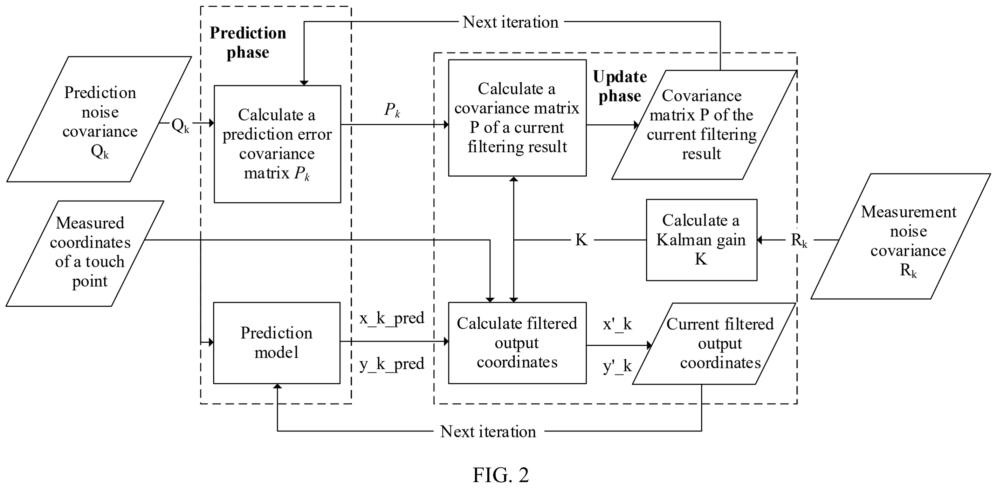

2. Kalman filtering (Kalman filtering, KF) is an algorithm that uses a linear system state equation to perform optimal estimation on a system state based on input and output observation data of a system. Because the observation data is affected by noise interference in the system, an optimal estimation process may also be considered as a filtering process. Data filtering is a data processing technology that removes noise and restores real data. In Kalman filtering, a state of a dynamic system can be estimated from a series of data with measurement noise when a measurement variance is known. As shown in FIG. 2, a filtering process of Kalman filtering includes the following phases:

Prediction phase

First, a predicted value at a moment K is obtained based on an input value at the moment K and an estimated value at a moment K-1. A prediction model used to predict the predicted value at the moment K satisfies the following equation:

$$\hat{x}_k = Ax_{k-1} + Bu_k.$$

Herein, $\hat{x}_k$ is the predicted value at the moment K, $x_{k-1}$ is an estimated value at the moment K-1, a state transition matrix A is an input value at the moment K, and B and $u_k$ are system control variables.

Then, an error covariance matrix $Pk$ of the predicted value at the moment K is obtained based on an error covariance matrix $Pk$-1 of the estimated value at the moment K-1 and a prediction noise covariance $Qk$ at the moment K. The error covariance matrix $Pk$ of the predicted value at the moment K obtained based on the error covariance matrix $Pk$-1 of the estimated value at the moment K-1 and the prediction noise covariance $Qk$ satisfies the following formula:

$$P_k = AP_{k-1}A^T + Q_k.$$

Herein, $A^T$ is a transposed matrix of the state transition matrix A.

Update phase

A measured value is filtered based on the predicted value $\hat{x}_k$ and the measured value $y_k$ at the moment K. An equation used to filter the measured value $y_k$ at the moment K is as follows:

$$x_k^1 = \hat{x}_k + K^1(y_k - C\hat{x}_k);$$

$$P_K^1 = (1 - K^1 C)P_k;$$

and

$$K^1 = P_k C^T (CP_k C^T + R_k)^{-1}.$$

Herein, $K^1$ is a Kalman gain coefficient, C represents a measurement matrix corresponding to the measured value at the moment K, $R_k$ represents a measurement noise covariance at the moment K, $P_k$ represents a prediction error covariance matrix, $x_k^1$ represents real values obtained through filtering, and $P_K^1$ represents a covariance matrix of a filtering result.

In embodiments of this application, "a plurality of" means two or more. In view of this, in embodiments of this application, "a plurality of" may also be understood as "at least two". "At least one" may be understood as one or more, for example, one, two, or more. For example, including at least one means including one, two, or more", and there is no limitation on which is included. For example, if at least one of A, B, and C is included, A, B, C, A and B, A and C, B and C, or A, B, and C may be included. The term "and/or" describes an association relationship between associated objects and indicates that three relationships may exist. For example, A and/or B may indicate the following three cases: Only A exists, both A and B exist, and only B exists. In addition, the character "/", unless otherwise specified, generally indicates an "or" relationship between the associated objects.

Unless otherwise specified, ordinal numbers such as "first" and "second" in embodiments of this application are used to distinguish between a plurality of objects, but are not intended to limit a sequence, a time sequence, priorities, or importance of the plurality of objects.

The technical solutions provided in embodiments of this application are described below with reference to specific accompanying drawings.

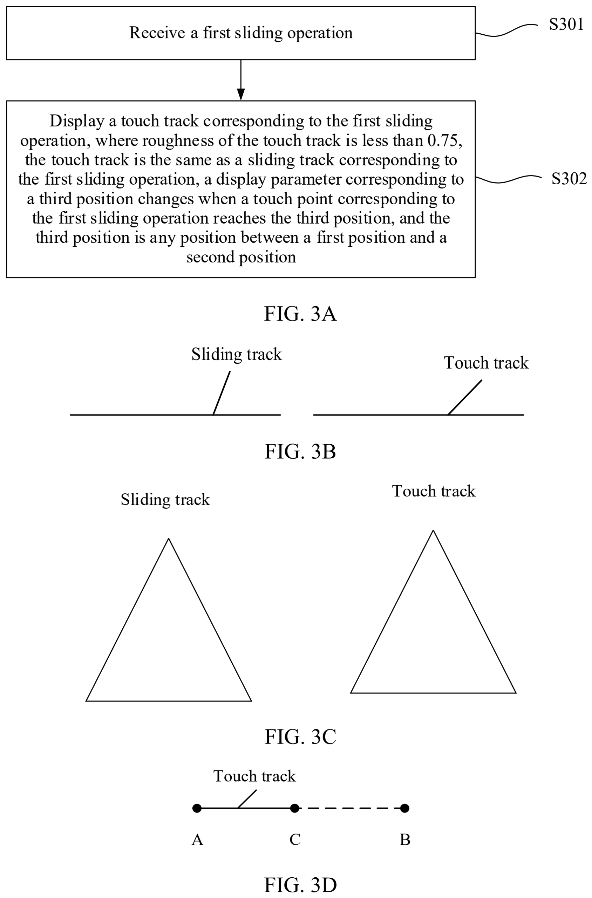

FIG. 3A is a schematic flowchart of a display method according to an embodiment of this application. The method may be applied to an electronic device. The method includes the following steps.

S301: Receive a first sliding operation.

The first sliding operation is used to slide from a first position to a second position.

A first action slides at a first speed, and a second action slides at a second speed; or a first action slides in a first direction, and a second action slides in a second direction. In this embodiment of this application, the first speed is different from the second speed, and the first direction is different from the second direction.

In a possible implementation, the first sliding operation may include at least one of straight-line sliding, broken-line sliding, or curved sliding. In this way, the user can use a touchscreen in a plurality of manners, and flexibly slide on the touchscreen. This effectively improves user experience.

S302: Display a touch track corresponding to the first sliding operation, where roughness of the touch track is less than 0.75, the touch track is the same as a sliding track corresponding to the first sliding operation, a display parameter corresponding to a third position changes when a touch point corresponding to the first sliding operation reaches the third position, and the third position is any position between the first position and the second position.

In this embodiment of this application, the "roughness" may be understood as a roughness degree of the touch track (that is, a status of a sawtooth line included in an edge of the touch track). Therefore, the roughness may be used to describe smoothness and a noise amount of the touch track, and smaller roughness indicates less noise impact on the touch track and a smoother touch track, that is, fewer sawtooth lines in the touch track. In some other embodiments, the roughness of the touch track may also be referred to as smoothness of the touch track. In this case, smaller smoothness indicates a smoother touch track.

Correspondingly, "roughness of the touch track is less than 0.75" may be understood as that the edge of the touch track is neat, and without many sawtooth lines. In other words, the edge of the touch track is smooth. For example, still refer to FIG. 3B. If the sliding track corresponding to the first sliding operation is a straight line, the touch track that corresponds to the first sliding operation and that is displayed by the electronic device is also a straight line, and an edge of the straight line is smooth and neat, and has no sawtooth line.

In this embodiment of this application, the smoothness of the touch track is evaluated based on the roughness of the touch track. It is assumed that a finger or a stylus (that is, a touch point) at a moment is at $P = (P_x(k), P_y(k))$, where $P_x(k)$ is an x-axis coordinate at a moment k, and $P_y(k)$ is a y-axis coordinate at the moment k. In this case, the roughness of the touch track may be determined according to the following formula 1-1 to formula 1-5.

The following formula 1-1 may be used to determine a position change magnitude $D_y$ of the touch point on a y axis at the moment k relative to a moment k-1. The following formula 1-2 is used to determine a change magnitude $A_y(k)$ of $D_y$. If the sliding track corresponding to the first sliding operation slides at a constant speed along an x axis, $A_y(k)$ is close to 0. Correspondingly, smoothness of a sawtooth track corresponding to each touch position may be determined based on $A_y(k)$. A larger value of $A_y(k)$ indicates poorer smoothness of the sawtooth track at the position.

Similarly, the following formula 1-3 may be used to determine a change magnitude $A_x(k)$ of $D_x$, where $D_x$ is an absolute value of a position change of the touch point on the x axis at the moment k relative to the moment K-1. In the following formula 1-4, roughness S(k) of the touch track of the touch point at the moment k may be determined by summing $A_y(k)$ and $A_x(k)$, and the roughness S(k) may be used to describe a change magnitude of a track without a direction, and smoothness and a noise amount of the touch track (that is, the status of the sawtooth line included in the touch track). Further, according to the following formula 1-5, roughness of touch tracks corresponding to touch points at at least two time points is averaged, to obtain roughness $S_{avg}$ of the touch track corresponding to the first sliding operation, where N is a quantity of touch points. A value of N is not specifically limited in embodiments of this application.

$$D_y(k) = |P_y(k) - P_y(k-1)| \qquad \text{Formula 1-1}$$

$$A_y(k) = |D_y(k) - D_y(k-1)| \qquad \text{Formula 1-2}$$

$$A_x(k) = |D_x(k) - D_x(k-1)| \qquad \text{Formula 1-3}$$

$$S(k) = A_x(k) + A_y(k) \qquad \text{Formula 1-4}$$

$$S_{avg} = \frac{1}{N-2} \sum_{k=1}^{N} S(k) \qquad \text{Formula 1-5}$$

In this embodiment of this application, "a sliding track corresponding to the first sliding operation" may be understood as a real track drawn by the user on the touchscreen, and "a touch track corresponding to the first sliding operation" may be understood as a track displayed on the touchscreen after the electronic device receives the first sliding operation. Correspondingly, "the touch track corresponding to the first sliding operation is the same as the sliding track corresponding to the first sliding operation" may be understood as that the touch track is consistent with the sliding track, in other words, the touch track and the sliding track have a same shape and size, and a display position of the touch track on the touchscreen is the same as an operation position of the first sliding operation on the touchscreen. "A display position of the touch track on the touchscreen is the same as an operation position of the first sliding operation on the touchscreen" may be understood as that a display position of each touch point in the touch track on the touchscreen is infinitely close to an operation position corresponding to the touch point. For example, still refer to FIG. 3C. If the sliding track corresponding to the first sliding operation is a triangle, the touch track that corresponds to the first sliding operation and that is displayed by the electronic device is also a triangle, and the two triangles have a same shape. In addition, positions of the two triangles on the touchscreen of the electronic device are the same.

In this embodiment of this application, "a display parameter corresponding to a third position changes when a touch point corresponding to the first sliding operation reaches the third position, and the third position is any position between the first position and the second position" may be understood as that when the user slides to the third position on the touchscreen, the display parameter of the position changes, to display the corresponding touch track. For example, still refer to FIG. 3D. For example, the first position is a position A, the first position is a position B, and the third position is a position C. The first sliding operation is used to slide from the position A to the position B. When the user slides to the position C, a cut-off point of a touch track displayed by the electronic device is the position C. In other words, when the user slides to the position C, the corresponding touch track is displayed at the position C. In this way, when the touch point reaches a position on the touchscreen, the electronic device may display a corresponding touch track at the position in time, that is, a delay of displaying the touch track is small. This effectively improves user experience.

Optionally, the display parameter includes at least one of an icon, a color, or brightness. In this way, when the sliding operation of the user generates the touch track, the electronic device can adjust a plurality of types of display parameters. In this way, the touch track can be displayed in a plurality of manners, so that the user can intuitively observe the touch track. The icon may include, for example, text or a graph.

In the display method shown in FIG. 3A, the electronic device may receive the first sliding operation whose direction and/or speed change/changes, and may display the touch track corresponding to the first sliding operation, where the roughness of the touch track is less than 0.75, the touch track is the same as the sliding track corresponding to the first sliding operation, the display parameter corresponding to the third position changes when the touch point corresponding to the first sliding operation reaches the third position, and the third position is any position between the first position and the second position. In this way, the touch track displayed by the electronic device is smooth, and has good accuracy, and a delay of displaying the touch track is small. This can effectively improve display effect of the touch track on the touchscreen, and can further effectively improve user experience.

In a possible implementation, a larger difference between the first speed and the second speed indicates smaller roughness of the touch track. In this way, display performance of the touch track on the touchscreen may be dynamically adjusted based on the difference between the first speed and the second speed, to improve the display effect of the touch track on the touchscreen. For example, when the first speed is twice the second speed, the roughness of the touch track is 0.7; or when the first speed is four times the second speed, the roughness of the touch track is 0.4.

In a possible implementation, a larger difference between the first direction and the second direction indicates smaller roughness of the touch track. In this way, display performance of the touch track on the touchscreen may be dynamically adjusted based on the difference between the first direction and the second direction, to improve the display effect of the touch track on the touchscreen. For example, when a direction difference between the first direction and the second direction is 90 degrees, the roughness of the touch track is 0.7; or when a direction difference between the first direction and the second direction is 120 degrees, the roughness of the touch track is 0.6.

In a possible implementation, the touch track is determined based on measured coordinates of the first position and filtered coordinates of the second position. The filtered coordinates of the second position are obtained by filtering measured coordinates of the second position based on a first state equation, and the first state equation is determined based on a sliding direction and/or a sliding speed of the first sliding operation. The sliding direction includes the first direction and the second direction, and the sliding speed includes the first speed and the second speed. In this way, because the sliding direction and/or the sliding speed of the first sliding operation are/is variable, the electronic device may determine a corresponding filtering equation (the first state equation) based on the sliding direction and/or the sliding speed, and filter, based on the filtering equation, the touch track corresponding to the first sliding operation, to eliminate impact of noise on the touch track. Therefore, the roughness of the touch track displayed by the electronic device is less than 0.75, and the touch track is the same as the sliding track corresponding to the first sliding operation.

In this embodiment of this application, an independent variable of the first state equation is the measured coordinates, and a dependent variable of the first state equation is filtered measured coordinates. Therefore, the filtered measured coordinates are obtained by filtering the measured coordinates of the second position based on the first state equation. The "filtered measured coordinates" may be understood as real values corresponding to the second position when the touch point on the touchscreen reaches the second position in an operation process of the first sliding operation.

In a possible implementation, when the sliding direction and/or the sliding speed are/is used to determine the first state equation, the electronic device may determine a first parameter based on the sliding speed, determine a second parameter based on the sliding direction, and determine the first state equation based on the first parameter and the second parameter. In this way, the first state equation can dynamically and adaptively change with the sliding direction and/or the sliding speed of the first sliding operation, to eliminate a roughness phenomenon of the touch track caused by the change with the sliding direction and/or the sliding speed of the first sliding operation, and further achieve better filtering effect. Therefore, the touch track displayed by the electronic device is closer to the real sliding track of the first sliding operation. This effectively improves the display effect of the touch track on the touchscreen.

In some possible embodiments, the first state equation corresponds to a Kalman filtering model, and correspondingly, the first parameter and the second parameter are parameters of the Kalman filtering model. For ease of understanding, the following describes a filtering process in embodiments of this application with reference to specific accompanying drawings.

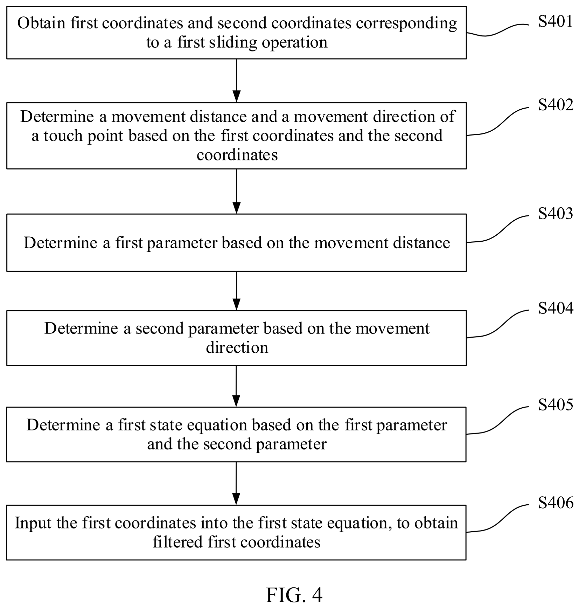

FIG. 4 is a schematic flowchart of a filtering method according to an embodiment of this application. The method may be applied to an electronic device. The method includes the following steps.

S401: Obtain first coordinates and second coordinates corresponding to a first sliding operation.

In this embodiment of this application, the "first coordinates" and the "second coordinates" are measured coordinates of a touch point in a coordinate system of a touchscreen at different moments. The first coordinates are measured coordinates of the touch point on the touchscreen at a first moment, the second coordinates are measured coordinates of the touch point on the touchscreen at a second moment, and the second moment includes at least one moment before the first moment. The "first moment" may correspond to a first data frame, the first data frame may be understood as a data frame collected at a current moment, and the first data frame includes specific values of the first coordinates. The "second moment" may correspond to a second data frame. "The second moment includes at least one moment before the first moment". Correspondingly, the second data frame may include at least one data frame before the first data frame, the second data frame may be understood as data frames collected at N moments before the current moment, and the second data frame includes specific values of the second coordinates. In other words, in this embodiment of this application, a movement distance and a movement direction of the touch point may be determined based on measured coordinates of the touch point included in one or N data frames before a current data frame and measured coordinates of the touch point included in the current data frame.

For example, the electronic device may obtain the first coordinates and the second coordinates via a touch sensor.

S402: Determine the movement distance and the movement direction of the touch point based on the first coordinates and the second coordinates.

In this embodiment of this application, the "movement distance of the touch point" may be understood as a sliding distance corresponding to the first sliding operation, and the "movement direction of the touch point" may be understood as a sliding direction corresponding to the first sliding operation. The sliding distance corresponding to the first sliding operation may include one or more sliding distances, and the sliding direction corresponding to the first sliding operation may be specifically one or more sliding directions. It should be understood that when the sliding direction of the first sliding operation changes, the first sliding operation corresponds to a plurality of sliding directions (for example, the first direction and the second direction described above). Optionally, one sliding direction corresponding to the first sliding operation may form one sliding distance corresponding to the first sliding operation.

In this embodiment of this application, the electronic device may further determine a movement speed of the touch point based on the first coordinates and the second coordinates. The "movement speed of the touch point" may be understood as a sliding speed corresponding to the first sliding operation, and the sliding speed corresponding to the first sliding operation may include one or more sliding speeds. For example, one sliding position in the first sliding operation corresponds to one sliding speed.

It can be learned from the foregoing descriptions that the second moment includes at least one moment before the first moment, and correspondingly, the second coordinates include at least one set of coordinates. For example, the first moment is a moment K, the second moment includes four moments before the moment K, and K is greater than 4. Correspondingly, the first coordinates are measured coordinates of the touch point at the moment K, and the second coordinates include measured coordinates of the touch point at a moment K-1, measured coordinates of the touch point at a moment K-2, measured coordinates of the touch point at a moment K-3, and measured coordinates of the touch point at a moment K-4. For another example, the first moment is a moment K, the second moment is a moment before the moment K, and K is greater than 1. Correspondingly, the first coordinates are measured coordinates of the touch point at the moment K, and the second coordinates include measured coordinates of the touch point at a moment K-1.

In this embodiment of this application, the electronic device determines the movement distance and the movement direction of the touch point based on the first coordinates and the second coordinates in a plurality of manners. The following provides descriptions in different cases:

Case 1: The first coordinates are the measured coordinates of the touch point at the moment K, and the second coordinates include only the measured coordinates of the touch point at the moment K-1.

In a possible implementation, the electronic device may determine the movement distance of the touch point according to the following formula:

$$\text{dist(k)} = \sqrt{(x_k - x_{k-1})^2 + (y_k - y_{k-1})^2}.$$

Herein, dist(k) is the movement distance, $(x_k, y_k)$ is the first coordinates, and $(x_{k-1}, y_{k-1})$ is the second coordinates.

In a possible implementation, the electronic device may determine the movement direction of the touch point according to the following formula:

$$\text{dir(k)} = \arctan\left(\frac{y_k - y_{k-1}}{x_k - x_{k-1}}\right) * \frac{180}{\pi}.$$

Herein, dir(k) is the movement direction, $(x_k, y_k)$ is the first coordinates, and $(x_{k-1}, y_{k-1})$ is the second coordinates.

Case 2: The first coordinates are the measured coordinates of the touch point at the moment K, and the second coordinates include the measured coordinates of the touch point at the moment K-1, the measured coordinates of the touch point at the moment K-2, and the measured coordinates of the touch point at the moment K-3.

In a possible implementation, the electronic device may perform average filtering on the measured coordinates of the touch point at the moment K, the measured coordinates of the touch point at the moment K-1, the measured coordinates of the touch point at the moment K-2, and the measured coordinates of the touch point at the moment K-3, to determine the movement distance of the touch point.

In another possible implementation, the electronic device may determine the movement distance of the touch point based on the measured coordinates of the touch point at the moment K and the measured coordinates of the touch point at the moment K-3. In this way, efficiency of determining the movement distance of the touch point can be effectively improved.

In a possible implementation, the electronic device may perform average filtering based on the measured coordinates of the touch point at the moment K, the measured coordinates of the touch point at the moment K-2, and the measured coordinates of the touch point at the moment K-3, to determine the movement direction of the touch point.

In another possible implementation, the electronic device may determine the movement direction of the touch point based on the measured coordinates of the touch point at the moment K and the measured coordinates of the touch point at the moment K-3. In this way, efficiency of determining the movement direction of the touch point can be effectively improved.

Optionally, before determining the movement distance or the movement direction of the touch point, the electronic device may filter the measured coordinates of the touch point at the moment K, the measured coordinates of the touch point at the moment K-1, the measured coordinates of the touch point at the moment K-2, and the measured coordinates of the touch point at the moment K-3. In this way, the determined movement distance of the touch point can be more accurate. A filtering manner may be, for example, low-pass filtering or median filtering. This is not specifically limited in embodiments of this application.

It may be understood that the second coordinates may include more or fewer measured coordinates of the touch point. This is not limited in embodiments of this application.

S403: Determine a first parameter based on the movement distance.

In this embodiment of this application, the first parameter is related to noise, and a first state equation constructed based on the first parameter may be used to filter the first coordinates.

In a possible implementation, when the first state equation is a filtering model of a Kalman filter, the first parameter includes a prediction noise covariance matrix Q and/or a measurement noise covariance matrix R, and a second parameter includes a state transition matrix A. The prediction noise covariance matrix Q and/or the measurement noise covariance matrix R are/is used to represent confidence of a prediction model, and the prediction model is used to predict a touch track of the touch point. The state transition matrix A is used to represent at least one of the movement distance, the movement speed, or a movement acceleration of the touch point. In this way, the prediction noise covariance matrix Q and/or the measurement noise covariance matrix R are/is determined based on the movement distance of the touch point, and the state transition matrix A is determined based on the movement direction of the touch point, so that the first state equation determined based on the state transition matrix A and the prediction noise covariance matrix Q and/or the measurement noise covariance matrix R can have better filtering effect.

Optionally, the measurement noise covariance matrix R may be determined based on detection accuracy of the touch sensor.

Correspondingly, when the first parameter includes the prediction noise covariance matrix Q and/or the measurement noise covariance matrix R, the movement distance may be used to determine a value of a first element in the prediction noise covariance matrix Q and/or a value of a first element in the measurement noise covariance matrix R. In this way, the first state equation constructed based on the prediction noise covariance matrix Q and/or the measurement noise covariance matrix R can be more accurate, so that first coordinates obtained through filtering based on the first state equation are closer to a real position of the touch point.

In a possible implementation, the prediction noise covariance matrix Q and/or the measurement noise covariance matrix R are/is diagonal matrices/a diagonal matrix, and correspondingly, in the prediction noise covariance matrix Q and/or the measurement noise covariance matrix R, the first element includes an element at a diagonal position.

In this embodiment of this application, the electronic device determines the value of the first element in the prediction noise covariance matrix Q and/or the value of the first element in the measurement noise covariance matrix R based on the movement distance in, but not limited to, the following manners.

Manner 1: Determine the first element based on the movement distance and according to a first formula. For example, the first formula is determined according to a gradient descent algorithm or a least square method.

In a possible implementation, the first formula is as follows:

$$q = a * (b * \text{dist(K)}^2 - c * \text{dist(k)} + d)^m.$$

Herein, a, b, c, d, and m are non-zero constants, q is the first element, and dist(k) is the movement distance.

Example 1: When a=13.975, b=0.0001, c=0.0024, d=0.45573, and m=8.6588, the first formula may be as follows:

$$q = 13.975 * (0.0001 * \text{dist(K)}^2 - 0.0024 * \text{dist(k)} + 0.45573)^{8.6588}.$$

Example 2: When a=13.975, b= 0.0015, c=0.0030, d=0.45573, and m=8.6588, the first formula may be as follows:

$$q = 13.975 * (0.0015 * \mathrm{dist(K)}^2 - 0.0030 * \mathrm{dist(k)} + 0.45573)^{8.6588}.$$

In Manner 1, the value of the first element may be determined according to the first formula determined according to the gradient descent algorithm, so that the first element can be flexibly determined, and the prediction noise covariance matrix Q and/or the measurement noise covariance matrix R can be flexibly determined.

Manner 2: Determine the value of the first element based on the movement distance and a first mapping table, where the first mapping table includes a mapping relationship between the movement distance and the first element. The first mapping table may be prestored in a terminal device or a server.

For example, the first mapping table is shown in Table 1. The electronic device may determine the value of the first element based on the first mapping table shown in Table 1. For example, when the movement distance is 1 ms, the value of the first element is 0.0148. For another example, when the movement distance is 2 ms, the value of the first element is 0.0154. For example, when the movement distance is 3 ms, the value of the first element is 0.0156.

Table 1

| Movement distance | First element |
| --- | --- |
| 1 ms | 0.0148 |
| 2 ms | 0.0154 |
| 3 ms | 0.0156 |

In Manner 2, the value of the first element may be quickly determined based on a mapping table, so that efficiency of determining the prediction noise covariance matrix Q and/or the measurement noise covariance matrix R is high.

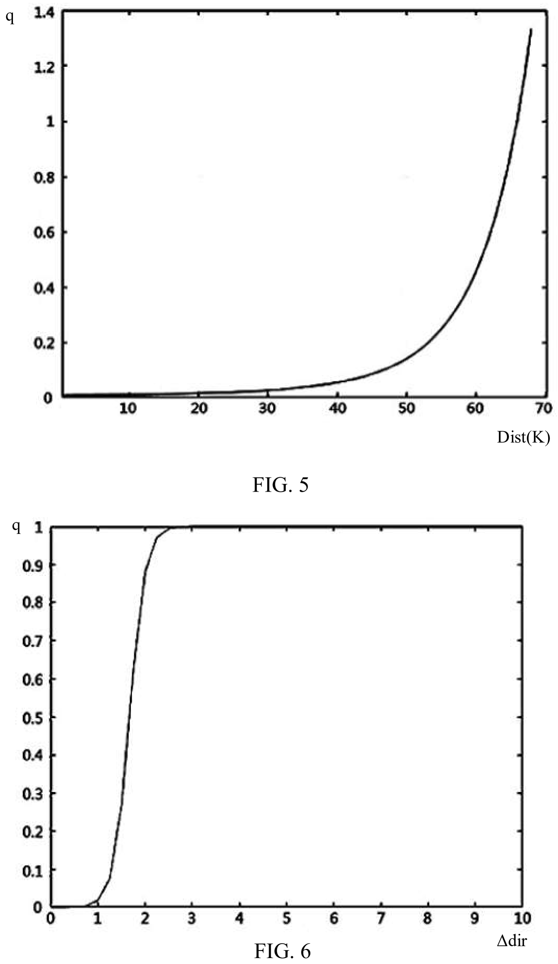

For ease of understanding, FIG. 5 is a diagram in which the value q of the first element changes with the movement distance dist(k). It can be seen from FIG. 5 that a larger movement distance dist(k) indicates a larger value q of the first element.

Optionally, step S403 may alternatively be determining the first parameter based on the sliding speed corresponding to the first sliding operation. For example, the first parameter includes the prediction noise covariance matrix Q and/or the measurement noise covariance matrix R. When the sliding speed is large, the value of the first element in the prediction noise covariance matrix Q and/or the value of the first element in the measurement noise covariance matrix R may be set to be large. When the sliding speed is small, the value of the first element in the prediction noise covariance matrix Q and/or the value of the first element in the measurement noise covariance matrix R may be set to be small.

S404: Determine the second parameter based on the movement direction.

In this embodiment of this application, the second parameter is related to a state vector of the touch point. In some possible embodiments, the first state equation is the filtering model of the Kalman filter, and correspondingly, the second parameter is a parameter of the Kalman filtering model.

In a possible implementation, the second parameter includes the state transition matrix A, and correspondingly, that the movement direction is used to determine the second parameter includes: determining a movement direction difference of the touch point at the first moment relative to the second moment based on a movement direction of the touch point at the first moment and a movement direction of the touch point at the second moment; and determining a value of a second element in the state transition matrix A based on the movement direction difference. In this way, the value of the second element in the state transition matrix A is determined based on the movement direction difference, so that the determined state transition matrix A better conforms to a current state of the touch point, the first state equation determined based on the state transition matrix A is more accurate, and the first coordinates obtained through filtering based on the first state equation are more accurate.

In a possible implementation, a prediction model of the Kalman filter may be determined based on N-order Taylor series, where N is a positive integer greater than 1. The state transition matrix A is used to construct the prediction model. Therefore, the state transition matrix A is associated with the N-order Taylor series.

Example 1: A state vector X1 corresponding to a prediction model determined based on first-order Taylor series is:

$$X1 = [x_1 \ x_2 \ x_3 \ x_4]^T.$$

Herein, x1 and x2 are expansion terms of the first-order Taylor series in an x direction, and x3 and x4 are expansion terms of the first-order Taylor series in a y direction.

Correspondingly, a state transition matrix A1 corresponding to the prediction model determined based on the first-order Taylor series is:

$$A1=\begin{bmatrix} 1 & \Delta t & 0 & 0 \\ 0 & 1 & 0 & 0 \\ 0 & 0 & 1 & \Delta t \\ 0 & 0 & 0 & 1 \end{bmatrix}.$$

Example 2: A state vector X2 corresponding to a prediction model determined based on second-order Taylor series is:

$$X2=\begin{bmatrix} x_1 & x_2 & x_3 & x_4 & x_5 & x_6 \end{bmatrix}^T.$$

Herein, x1, x2, and x3 are expansion terms of the second-order Taylor series in an x direction, and x4, x5, and x6 are expansion terms of the second-order Taylor series in a y direction.

Correspondingly, a state transition matrix A2 corresponding to the prediction model determined based on the second-order Taylor series is:

$$A2=\begin{bmatrix} 1 & \Delta t & 0.5\Delta t^2 & 0 & 0 & 0 \\ 0 & 1 & \Delta t & 0 & 0 & 0 \\ 0 & 0 & 1 & 0 & 0 & 0 \\ 0 & 0 & 0 & 1 & \Delta t & 0.5\Delta t^2 \\ 0 & 0 & 0 & 0 & 1 & \Delta t \\ 0 & 0 & 0 & 0 & 0 & 1 \end{bmatrix}.$$

In this embodiment of this application, the value of the second element in the state transition matrix A is determined based on the movement direction difference in, but not limited to, the following manners.

Manner 1: Determine the second element based on the movement direction difference and according to a second formula. In a possible implementation, the second formula is as follows:

$$\beta = \frac{1}{1+e^{-(f*\Delta dir-g)}}.$$

Herein, f and g are non-zero constants, $\beta$ is the second element, and $\Delta dir$ is the movement direction difference.

Example 1: When f=4 and g=10, the second formula is as follows:

$$\beta = \frac{1}{1+e^{-(4*\Delta dir-10)}}.$$

Example 2: When f=2 and g=10, the second formula is as follows:

$$\beta = \frac{1}{1+e^{-(2*\Delta dir-10)}}.$$

In Manner 1, the value of the second element in the state transition matrix A may be flexibly determined according to a formula corresponding to the movement direction difference, so that the value of the second element in the state transition matrix A may be flexibly determined.

Manner 2: Determine the second element based on the movement direction difference and a second mapping table, where the second mapping table includes a mapping relationship between the movement direction difference and the second element.

For example, the second mapping table is shown in Table 2. The electronic device may determine the value of the second element based on the second mapping table shown in Table 2. For example, when the movement direction difference is 0.5 degrees, the value of the second element is 0.015. For another example, when the movement direction difference is 0.7 degrees, the value of the second element is 0.048. For example, when the movement direction difference is 0.9 degrees, the value of the second element is 0.069.

Table 2

| Movement direction difference | Second element |
|---|---|
| 0.5 degrees | 0.015 |
| 0.7 degrees | 0.048 |
| 0.9 degrees | 0.069 |

For ease of understanding, FIG. 6 is a diagram in which the value q of the second element $\beta$ changes with the movement direction difference $\Delta$dir.

S405: Determine the first state equation based on the first parameter and the second parameter.

In this embodiment of this application, when the first parameter includes the state transition matrix A, and the second parameter includes the prediction noise covariance matrix Qk, that the electronic device determines the first state equation based on the first parameter and the second parameter includes the following steps:

(1) Construct the prediction model based on the N-order Taylor series and the state transition matrix A.

The prediction model is used to predict the touch track of the touch point. In other words, the prediction model is a prediction model of the touch point.

The N-order Taylor series may be, for example, any one of first-order Taylor series, second-order Taylor series, or third-order Taylor series. This is not specifically limited in embodiments of this application.

In a possible implementation, a prediction model determined by the electronic device based on the N-order Taylor series is as follows:

$$\hat{x}_k = A x_{k-1}.$$

Herein, $\hat{x}_k$ is a prediction position of the touch point at the moment K, $x_{k-1}$ is an estimated value of the touch point at the moment K-1, and the state transition matrix A is a measured value of the touch point at the moment K.

(2) Determine a prediction error covariance matrix $PK$ of the touch point at the first moment based on the prediction noise covariance matrix Qk and the state transition matrix A.

In a possible implementation, the prediction error covariance matrix $PK$ of the touch point at the first moment is determined based on the prediction noise covariance matrix Qk and the state transition matrix A, and satisfies the following formula:

$$P_k = A P_{k-1} A^T + Q_k.$$

Herein, $A^T$ is a transposed matrix of the state transition matrix A.

(3) Determine a measurement matrix C corresponding to the first coordinates.

For example, the electronic device converts the first coordinates, to obtain a corresponding measurement matrix C.

(4) Determine a first Kalman gain coefficient $K^1$ based on the measurement matrix C, the prediction error covariance matrix $PK$, and a measurement noise covariance $R_k$.

In a possible implementation, the electronic device may determine the first Kalman gain coefficient K1 according to the following formula:

$$K^1 = P_k C^T (C P_k C^T + R_k)^{-1}.$$

Herein, $K^1$ is the first Kalman gain coefficient, C represents the measurement matrix obtained through conversion based on a measured value at the moment K, $C^T$ is a transposed matrix of the state transition matrix C, $R_k$ represents a measurement noise covariance at the moment K, and $P_k$ represents the prediction error.

(5) Determine a covariance matrix $P_K^1$ of a filtering result based on the measurement matrix C, the prediction error covariance matrix *PK*, and the first Kalman gain coefficient K1. A specific calculation formula is as follows:

$$P_K^1 = (1 - K^1 C)P_k.$$

Herein, $K^1$ is the first Kalman gain coefficient, C represents the measurement matrix obtained through conversion based on the measured value at the moment K, $P_k$ represents the prediction error covariance matrix, and $P_K^1$ represents the covariance matrix of the filtering result.

(6) Update the prediction model based on the first Kalman gain coefficient K1, to obtain the first state equation. The first state equation is as follows:

$$x_k^1 = \hat{x}_k + K^1(y_k - C\hat{x}_k).$$

Herein, $K^1$ is the Kalman gain coefficient, C represents the measurement matrix obtained through conversion based on the measured value at the moment K, $R_k$ represents the measurement noise covariance at the moment K, $P_k$ represents the prediction error covariance matrix, $x_k^1$ represents real values obtained through filtering, and $P_K^1$ represents the covariance matrix of the filtering result.

Therefore, the movement track prediction model (namely, the prediction model) of the touch point may be constructed based on the N-order Taylor series and the state transition matrix A, the first Kalman gain coefficient of the Kalman filter is determined based on the prediction noise covariance matrix Q and the state transition matrix A, and the prediction model is updated based on the first Kalman gain coefficient, to obtain a Kalman filtering model (that is, the first state equation), so that measured coordinates obtained through filtering based on the first state equation are closer to the real values.

S406: Input the first coordinates into the first state equation, to obtain the filtered first coordinates.

In this embodiment of this application, an independent variable of the first state equation is a measurement position (that is, the first coordinates) of the touch point at the first moment, and a dependent variable of the first state equation is an actual position of the touch point at the first moment. Therefore, the first state equation may be used to filter the first coordinates, to obtain the filtered first coordinates. The "filtered first coordinates" may be understood as the actual position of the touch point on the touchscreen at the first moment.

According to the foregoing method, the parameter of the Kalman filtering model may be adaptively adjusted based on the movement distance and the movement direction of the touch point, so that good smoothing effect is achieved, and problems such as a delay and a distortion difference are not caused. At different touch movement distances, good smoothing effect can be achieved by adaptively adjusting a model parameter. For touch tracks of different forms, a model parameter is dynamically adjusted based on a movement direction difference. Therefore, no distortion problem is caused in a filtering process. There is no delay in a smoothing process, and a response can be quickly made to touch of a user.

Further, in a possible implementation, the electronic device may further determine, based on the prediction error covariance matrix *PK,* the first Kalman gain coefficient K1, and the measurement matrix C, an error covariance matrix *P'K* corresponding to the filtered first coordinates, where the error covariance matrix *P'K* is used to determine a second Kalman gain coefficient; update the first state equation based on the second Kalman gain coefficient, to obtain an updated first state equation; obtain third coordinates, where the third coordinates are measured coordinates of the touch point at a third moment, and the third moment is a moment after the first moment; and input the third coordinates into the updated first state equation, to obtain filtered third coordinates. Therefore, the second Kalman gain coefficient may be determined based on the error covariance matrix *P'K* corresponding to the filtered first coordinates, the first state equation is updated based on the second Kalman gain coefficient, to obtain the updated first state equation, and the measured coordinates of the touch point corresponding to the third moment after the first moment are filtered based on the updated first state equation. In this way, the parameter of the Kalman filtering model is updated in real time, so that a position of the touch point obtained based on the Kalman filtering model is more accurate, and the touch point can be accurately displayed on the touchscreen in time. This effectively improves user experience.

For ease of understanding, the following further describes, with reference to a specific example, the display method provided in embodiments of this application.

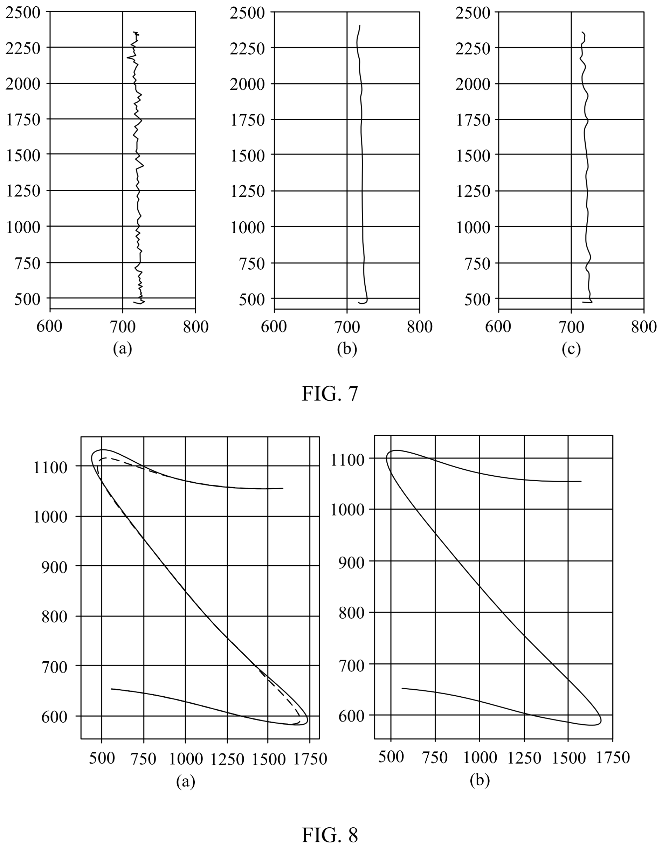

In this embodiment of this application, when the touch track of the touch point is a straight line, filtering effect obtained through filtering based on a filtering model corresponding to the first-order Taylor series is better than filtering effect obtained through filtering based on a filtering model corresponding to the second-order Taylor series. For example, as shown in FIG. 7, a real touch track of the touch point is a vertical line, where (a) in FIG. 7 shows a touch track displayed on the touchscreen when the touch track is not filtered, (b) in FIG. 7 shows a touch track displayed on the touchscreen after the touch track is filtered based on the filtering model corresponding to the first-order Taylor series, and (c) in FIG. 7 shows a touch track displayed on the touchscreen after the touch track is filtered based on the filtering model corresponding to the second-order Taylor series.

When the touch track of the touch point is a curve or a movement direction changes, filtering is performed based on the filtering model corresponding to the first-order Taylor series, easily resulting in distortion of the filtered touch track. However, filtering is performed based on the filtering model corresponding to the second-order Taylor series, so that the touch track displayed on the touchscreen can be the same as a sliding track of the user. For example, as shown in FIG. 8, a real touch track of the touch point is a curve, where dashed lines shown in (a) in FIG. 8 and (b) in FIG. 8 are touch tracks displayed on the touchscreen when the touch track is not filtered, a solid line shown in (a) in FIG. 8 is a touch track displayed on the touchscreen after the touch track is filtered based on the filtering model corresponding to the first-order Taylor series, and a solid line shown in (b) in FIG. 8 is a touch track displayed on the touchscreen after the touch track is filtered based on the filtering model corresponding to the second-order Taylor series. Obviously, effect of filtering the touch track based on the filtering model corresponding to the second-order Taylor series is better than effect of filtering the touch track based on the filtering model corresponding to the first-order Taylor series.

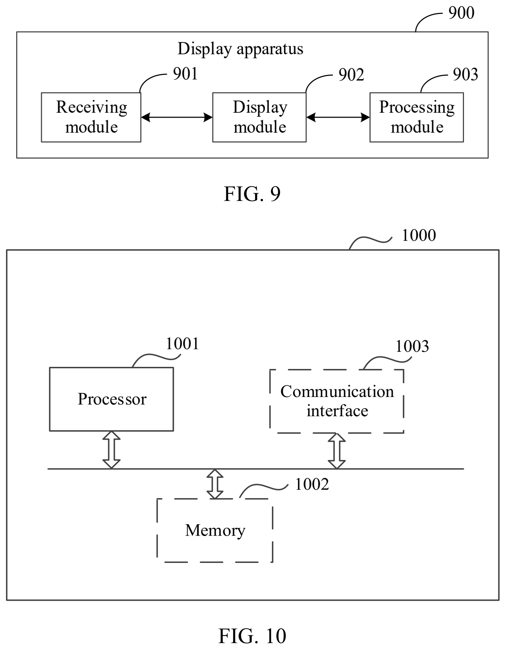

Based on a same technical concept as the foregoing embodiment, an embodiment of this application further provides a display apparatus. The display apparatus may be configured to implement the foregoing method embodiment, and therefore can achieve beneficial effect of the foregoing method embodiment. As shown in FIG. 9, the display apparatus 900 may include:

a receiving module 901, configured to receive a first sliding operation, where the first sliding operation includes a first action and a second action; the first sliding operation is used to slide from a first position to a second position; and the first action slides at a first speed, and the second action slides at a second speed; or the first action slides in a first direction, and the second action slides in a second direction; and

a display module 902, configured to display a touch track corresponding to the first sliding operation, where roughness of the touch track is less than 0.75, the touch track is the same as a sliding track corresponding to the first sliding operation, a display parameter corresponding to a third position changes when a touch point corresponding to the first sliding operation reaches the third position, and the third position is any position between the first position and the second position.

In a possible design, a larger difference between the first speed and the second speed indicates smaller roughness of the touch track.

In a possible design, a larger difference between the first direction and the second direction indicates smaller roughness of the touch track.

In a possible design, the display parameter includes at least one of an icon, a color, or brightness.

In a possible design, the first sliding operation includes at least one of straight-line sliding, broken-line sliding, or curved sliding.

In a possible design, the touch track is determined by a processing module based on measured coordinates of the first position and filtered coordinates of the second position. The filtered coordinates of the second position are obtained by filtering measured coordinates of the second position based on a first state equation, and the first state equation is determined by the processing module based on a sliding direction and/or a sliding speed of the first sliding operation. The sliding direction includes the first direction and the second direction, and the sliding speed includes the first speed and the second speed.

In a possible design, the processing module 903 is specifically configured to: determine a first parameter based on the sliding speed; determine a second parameter based on the sliding direction; and determine the first state equation based on the first parameter and the second parameter.

In some possible embodiments, the first state equation corresponds to a Kalman filtering model, and correspondingly, the first parameter and the second parameter are parameters of the Kalman filtering model.

Further, in a possible design, the first parameter includes a prediction noise covariance matrix Q and/or a measurement noise covariance matrix R, and the second parameter includes a state transition matrix A. The prediction noise covariance matrix Q and/or the measurement noise covariance matrix R are/is used to represent confidence of a prediction model, and the prediction model is used to predict the touch track of the touch point. The state transition matrix A is used to represent at least one of a movement distance, a movement speed, or a movement acceleration of the touch point.

Further, in a possible design, the processing module 903 is specifically configured to: determine the movement distance of the touch point based on the sliding speed; and determine a value of a first element in the prediction noise covariance matrix Q and/or a value of a first element in the measurement noise covariance matrix R based on the movement distance.

In a possible design, in the prediction noise covariance matrix Q and/or the measurement noise covariance matrix R, the first element includes an element at a diagonal position.

In a possible design, the value of the first element is determined based on the movement distance and according to a first formula; or the value of the first element is determined based on the movement distance and a first mapping table, where the first mapping table includes a mapping relationship between the movement distance and the first element.

In a possible design, the first formula is as follows:

$$q = a * (b * dist(K)^2 - c * dist(k) + d)^m.$$

Herein, a, b, c, d, and m are non-zero constants, q is the first element, and dist(k) is the movement distance.

In a possible design, the processing module 903 is specifically configured to: determine a movement direction difference of the touch point based on the sliding direction; and determine a value of a second element in the state transition matrix A based on the movement direction difference.

In a possible design, the value of the second element is determined based on the movement direction difference and according to a second formula; or the value of the second element is determined based on the movement direction difference and a second mapping table, where the second mapping table includes a mapping relationship between the movement direction difference and the second element.

In a possible design, the second formula is as follows:

$$\beta = \frac{1}{1 + e^{-(f * \Delta dir - g)}}.$$

Herein, f and g are non-zero constants, $\beta$ is the second element, and $\Delta$dir is the movement direction difference.

In a possible design, the processing module 903 is specifically configured to: construct a prediction model based on N-order Taylor series and the state transition matrix A; determine a prediction error covariance matrix *PK* of the touch point at a first moment based on the prediction noise covariance matrix Q and the state transition matrix A; determine a first Kalman gain coefficient K1 based on a measurement matrix C, the prediction error covariance matrix *PK*, and the measurement noise covariance R that correspond to first coordinates; and update the prediction model based on the first Kalman gain coefficient K1, to obtain the first state equation. The N-order Taylor series may be, for example, any one of first-order Taylor series, second-order Taylor series, or third-order Taylor series. This is not specifically limited in embodiments of this application. In this design, the prediction model may be constructed based on the N-order Taylor series and the state transition matrix A, the first Kalman gain coefficient of a Kalman filter is determined based on the prediction noise covariance matrix Q and the state transition matrix A, and the prediction model is updated based on the first Kalman gain coefficient, to obtain the Kalman filtering model (that is, the first state equation).

In a possible design, the processing module 903 is further configured to: determine, based on the prediction error covariance matrix *PK,* the first Kalman gain coefficient K1, and the measurement matrix C, an error covariance matrix *P'K* corresponding to filtered first coordinates, where the error covariance matrix *P'K* is used to determine a second Kalman gain coefficient; and update the first state equation based on the second Kalman gain coefficient, to obtain an updated first state equation. The receiving module is further configured to: receive a second sliding operation, where the second sliding operation is a sliding operation after the first sliding operation, and the second sliding operation and the first sliding operation are consecutive; filter, based on the updated first state equation, measured coordinates corresponding to the second sliding operation; and display, based on filtered measured coordinates, a touch track corresponding to the second sliding operation.

Based on a same technical concept, an embodiment of this application further provides an electronic device 1000, configured to perform the method in the foregoing embodiment. As shown in FIG. 10, the electronic device 1000 may include a processor 1001, configured to execute a program or instructions stored in a memory 1002. When the program or the instructions stored in the memory 1002 are executed, the processor is configured to perform the method in the foregoing embodiment.

Optionally, the electronic device 1000 may further include a communication interface 1003. FIG. 10 shows, with dashed lines, that the communication interface 1003 is optional for the electronic device 1000.

A quantity of processors 1001, a quantity of memories 1002, and a quantity of communication interfaces 1003 do not constitute limitations on embodiments of this application, and during specific implementation, may be randomly configured based on a service requirement.

Optionally, the memory 1002 is located outside the electronic device 1000.

Optionally, the electronic device 1000 includes the memory 1002. The memory 1002 is connected to the at least one processor 1001, and the memory 1002 stores instructions that can be executed by the at least one processor 1001. FIG. 10 shows, with dashed lines, that the memory 1002 is optional for the electronic device 1000.

The processor 1001 and the memory 1002 may be coupled to each other through an interface circuit, or may be integrated together. This is not limited herein.

A specific connection medium between the processor 1001, the memory 1002, and the communication interface 1003 is not limited in embodiments of this application. In this embodiment of this application, the processor 1001, the memory 1002, and the communication interface 1003 are connected to each other through a bus 1004 in FIG. 10. The bus is represented by a bold line in FIG. 10. A manner of connection between other components is merely an example for description, and is not limited thereto. The bus may be classified into an address bus, a data bus, a control bus, or the like. For ease of representation, the bus is represented by only one bold line in FIG. 10. However, this does not mean that there is only one bus or one type of bus.

It should be understood that the processor mentioned in embodiments of this application may be implemented by hardware or software. When the processor is implemented by the hardware, the processor may be a logic circuit, an integrated circuit, or the like. When the processor is implemented by the software, the processor may be a general-purpose processor, and is implemented by reading software code stored in the memory.

For example, the processor may be a central processing unit (Central Processing Unit, CPU), or may be another general-purpose processor, a digital signal processor (Digital Signal Processor, DSP), an application-specific integrated circuit (Application Specific Integrated Circuit, ASIC), a field programmable gate array (Field Programmable Gate Array, FPGA), another programmable logic device, a discrete gate, a transistor logic device, a discrete hardware component, or the like. The general-purpose processor may be a microprocessor, or the processor may be any conventional processor or the like.

It should be understood that the memory mentioned in embodiments of this application may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example not limitative description, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA, another programmable logic device, a discrete gate, a transistor logic device, or a discrete hardware component, the memory (a storage module) may be integrated in the processor.

It should be noted that the memory described in this specification is intended to include but is not limited to these memories and any other appropriate type of memory.

The foregoing embodiments may be combined with each other to achieve different technical effect.

Based on the foregoing embodiments, an embodiment of this application further provides a computer-readable storage medium. The computer-readable storage medium stores a computer program. When the computer program is executed by a computer, the computer is enabled to perform any display method provided in the foregoing embodiment.

The storage medium may be any usable medium that can be accessed by the computer. The following provides an example but does not impose a limitation: The computer-readable medium may include a RAM, a ROM, an EEPROM, a CD-ROM, another optical disc storage, a magnetic disk storage medium, another magnetic storage device, or any other medium that can carry or store expected program code in a form of instructions or a data structure and that can be accessed by the computer.

Based on the foregoing embodiments, an embodiment of this application further provides a chip. The chip is configured to read a computer program stored in a memory, to implement any display method provided in the foregoing embodiment.

Based on the foregoing embodiments, an embodiment of this application provides a chip system. The chip system includes a processor, configured to support a computer apparatus to implement a function of any node in the foregoing embodiment. In a possible design, the chip system further includes a memory, and the memory is configured to store a program and data that are necessary for the computer apparatus. The chip system may include a chip, or may include a chip and another discrete component.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, and an optical memory) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may be stored in a computer-readable memory that can instruct the computer or another programmable data processing device to operate in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the protection scope of this application. This application is intended to cover these modifications and variations of this application provided that they fall within the scope of protection defined by the following claims and their equivalent technologies.

**Claims**

1.   A display method, applied to an electronic device, and comprising:

receiving a first sliding operation, wherein the first sliding operation comprises a first action and a second action; the first sliding operation is used to slide from a first position to a second position; and the first action slides at a first speed, and the second action slides at a second speed; or the first action slides in a first direction, and the second action slides in a second direction; and

displaying a touch track corresponding to the first sliding operation, wherein roughness of the touch track is less than 0.75, the touch track is the same as a sliding track corresponding to the first sliding operation, a display parameter corresponding to a third position changes when a touch point corresponding to the first sliding operation reaches the third position, and the third position is any position between the first position and the second position, wherein

the roughness of the touch track is used to describe a status of a sawtooth line comprised in an edge of the touch track.

2.   The method according to claim 1, wherein a larger difference between the first speed and the second speed indicates smaller roughness of the touch track.

3.   The method according to claim 1, wherein a larger difference between the first direction and the second direction indicates smaller roughness of the touch track.

4.   The method according to any one of claims 1 to 3, wherein the display parameter comprises at least one of an icon, a color, or brightness.

5.   The method according to any one of claims 1 to 4, wherein the first sliding operation comprises at least one of straight-line sliding, broken-line sliding, or curved sliding.

6.   A display apparatus, comprising:

a receiving module, configured to receive a first sliding operation, wherein the first sliding operation comprises a first action and a second action; the first sliding operation is used to slide from a first position to a second position; and the first action slides at a first speed, and the second action slides at a second speed; or the first action slides in a first direction, and the second action slides in a second direction; and

a display module, configured to display a touch track corresponding to the first sliding operation, wherein roughness of the touch track is less than 0.75, the touch track is the same as a sliding track corresponding to the first sliding operation, a display parameter corresponding to a third position changes when a touch point corresponding to the first sliding operation reaches the third position, and the third position is any position between the first position and the second position, wherein

the roughness of the touch track is used to describe a status of a sawtooth line comprised in an edge of the touch track.

7. The apparatus according to claim 6, wherein a larger difference between the first speed and the second speed indicates smaller roughness of the touch track.

8. The apparatus according to claim 6, wherein a larger difference between the first direction and the second direction indicates smaller roughness of the touch track.

9. An electronic device, comprising a processor, wherein the processor is configured to perform the method according to any one of claims 1 to 5.

10. A computer-readable storage medium, wherein the computer-readable storage medium comprises a computer program, and when the computer program is run on an electronic device, the electronic device is enabled to perform the method according to any one of claims 1 to 5.

FIG. 1

FIG. 2

Receive a first sliding operation —— S301

Display a touch track corresponding to the first sliding operation, where roughness of the touch track is less than 0.75, the touch track is the same as a sliding track corresponding to the first sliding operation, a display parameter corresponding to a third position changes when a touch point corresponding to the first sliding operation reaches the third position, and the third position is any position between a first position and a second position —— S302

FIG. 3A

Sliding track

Touch track

FIG. 3B

Sliding track

Touch track

FIG. 3C

Touch track

A        C        B

FIG. 3D

Obtain first coordinates and second coordinates corresponding to a first sliding operation ⟜ S401

Determine a movement distance and a movement direction of a touch point based on the first coordinates and the second coordinates ⟜ S402

Determine a first parameter based on the movement distance ⟜ S403

Determine a second parameter based on the movement direction ⟜ S404

Determine a first state equation based on the first parameter and the second parameter ⟜ S405

Input the first coordinates into the first state equation, to obtain filtered first coordinates ⟜ S406

FIG. 4

FIG. 5

FIG. 6

FIG. 7

FIG. 8

900

| Display apparatus |
|---|

Receiving module — 901

Display module — 902

Processing module — 903

FIG. 9

1000

Processor — 1001

Communication interface — 1003

Memory — 1002

FIG. 10

# INTERNATIONAL SEARCH REPORT

| International application No. |
|---|
| **PCT/CN2023/121968** |

**A. CLASSIFICATION OF SUBJECT MATTER**

G06F3/041(2006.01)i

According to International Patent Classification (IPC) or to both national classification and IPC

**B. FIELDS SEARCHED**

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNABS; CNTXT; DWPI; VEN; USTXT; WOTXT; EPTXT; CNKI: 滑, 拖, 轨迹, 平滑, 粗糙, 齿, 差值, slide, drag, track, smoothness, roughness, sawtooth, difference

**C. DOCUMENTS CONSIDERED TO BE RELEVANT**

| Category* | Citation of document, with indication, where appropriate, of the relevant passages | Relevant to claim No. |
|---|---|---|
| X | CN 113676586 A (HONOR TERMINAL CO., LTD.) 19 November 2021 (2021-11-19) description, paragraphs 5-139, and figures 9-14 | 1-10 |
| X | CN 115509386 A (BEIJING ESWIN COMPUTING TECHNOLOGY CO., LTD.) 23 December 2022 (2022-12-23) description, paragraphs 34-157 | 1, 3-6, 8-10 |
| A | CN 114494046 A (BAIGUOYUAN TECHNOLOGY (SINGAPORE) PTE LTD.) 13 May 2022 (2022-05-13) entire document | 1-10 |
| A | US 2011298807 A1 (SAMSUNG ELECTRONICS CO., LTD.) 08 December 2011 (2011-12-08) entire document | 1-10 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 January 2024** | **04 January 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2023/121968** |

| Patent document cited in search report | | | Publication date (day/month/year) | Patent family member(s) | | | Publication date (day/month/year) |
| --- | --- | --- | --- | --- | --- | --- | --- |
| CN | 113676586 | A | 19 November 2021 | CN | 113676586 | B | 03 March 2023 |
| CN | 115509386 | A | 23 December 2022 | None | | | |
| CN | 114494046 | A | 13 May 2022 | None | | | |
| US | 2011298807 | A1 | 08 December 2011 | US | 8896606 | B2 | 25 November 2014 |
| | | | | KR | 20110133787 | A | 14 December 2011 |
| | | | | KR | 101126167 | B1 | 22 March 2012 |

Form PCT/ISA/210 (patent family annex) (July 2022)

**REFERENCES CITED IN THE DESCRIPTION**

**Patent documents cited in the description**

- CN 202310158279